# EUROPEAN PATENT SPECIFICATION

(11) **EP 0 867 600 B1**
(45) Date of publication and mention of the grant of the patent: **11.04.2001**
(21) Application number: 98101588.6
(22) Date of filing: 30.01.1998
(51) Int. Cl.: F01L 1/02, F16H 7/08

(54) **A chain tensioner having a shoe made of plastic material and a blade spring or springs with curved ends**
Kettenspanner mit einer Gleitschiene aus Kunststoffmaterial und mit einer Blattfeder oder Federn mit gekrümmten Enden.
Tendeur de chaîne ayant un patin en matériau plastique et un ressort lame ou des ressorts avec des extrêmités incurvées

(30) Priority: 28.03.1997 IT MI970738
(43) Date of publication of application: 30.09.1998
(73) Proprietor: Morse Tec Europe S.p.A., 20121 Milano (IT)
(72) Inventor: Baddaria, Giuseppe, 22059 Robbiate (Lecco) (IT)
(74) Representative: Zavattoni, Maria Chiara

(56) References cited:
- US-A- 5 055 088
- US-A- 5 266 066
- US-A- 5 425 680

## Description

The invention refers to chain tensioners particularly but not exclusively in the automotive field.

In a chain drive, the gearing chain, for example, a roller chain or another type of chain, is wound around a driving sprocket and a driven sprocket. The stretched side of the chain is generally guided by a fixed straight shoe, while on the slack side a tensioning device is provided to prevent flapping and so that the chain will engage an adequate arc on the driving sprocket and the driven sprocket. The automobile industry has long been concerned with better tensioning devices. A currently preferred type includes a shoe portion made of plastic material coupled with one or more blade springs.

A prior art tensioner of this kind is known from US-A-5 425 680 and shown in Figures 2, 3, and 4. A shoe element 2 of the tensioner 1 is generally made of thermoplastic material and includes an enlarged head 3 at one end and an enlarged head 4 at the other end. The enlarged head 3 and the enlarged head 4 have blind pockets 3a and 4a. A set of blade springs, three in the example of Figure 3, and two in the example of Figure 4, are coupled to the shoe and referenced 5. The blade springs have a substantially elongated rectangular shape in plan view, with a length slightly less than the distance between the ends of the pockets 3a, 4a. Laterally, the blade springs are contained by lateral containment walls 7, 3b and 4b at heads 3 and 4, and on the opposite side by teeth 6. The head 4 has a through-hole 4c to receive a pin (not shown) on which the tensioner 1 is pivotally mounted.

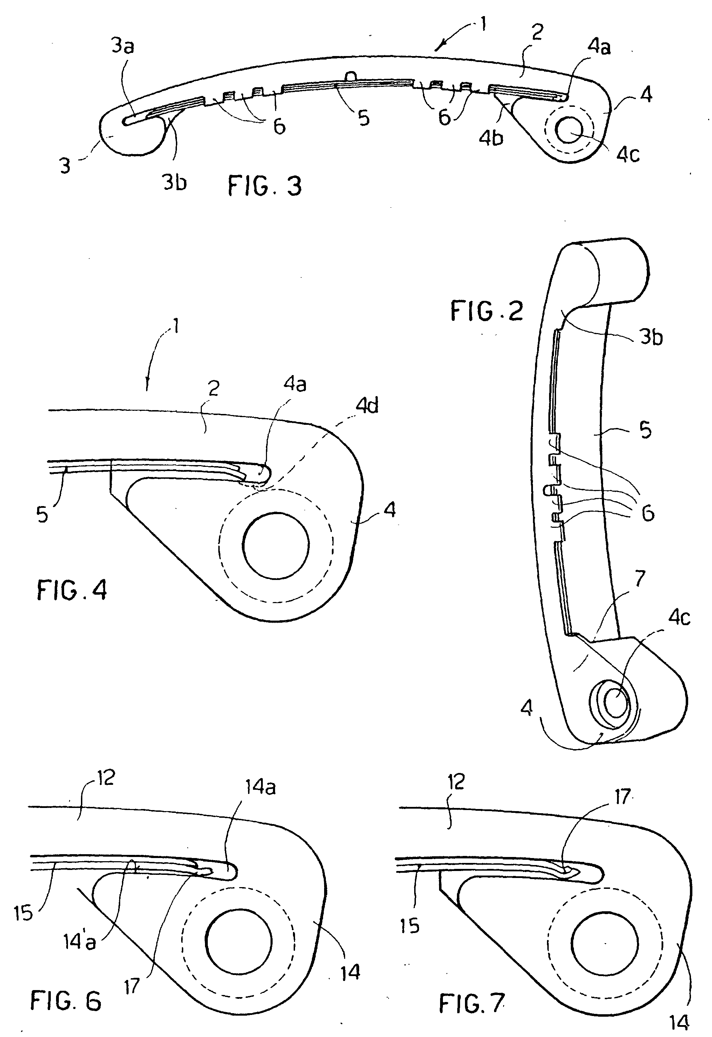

The tensioner is mounted by coupling the set or pack of blade springs 5, which in the absence of stress has a U-shape, and the shoe 2, which in the absence of stress has flat or planar shape. When the set of springs 5 are mounted with their ends in the channels 3a and 4a, the assembly takes the shape shown in Figures 2 and 3. When the tensioner is exposed to heating, which occurs, for example, when it is mounted on a timing system in a motor vehicle and when the engine is running, the plastic material of the shoe deforms additionally and the tensioner takes a more curved shape, depending on the length of the loose side of the chain and keeps it, at normal temperature. Cyclic variations in the transmitted torque, characteristic of the motor field, cause continuous variations in the radius of the shoe, resulting in sliding of the spring ends within the respective pockets.

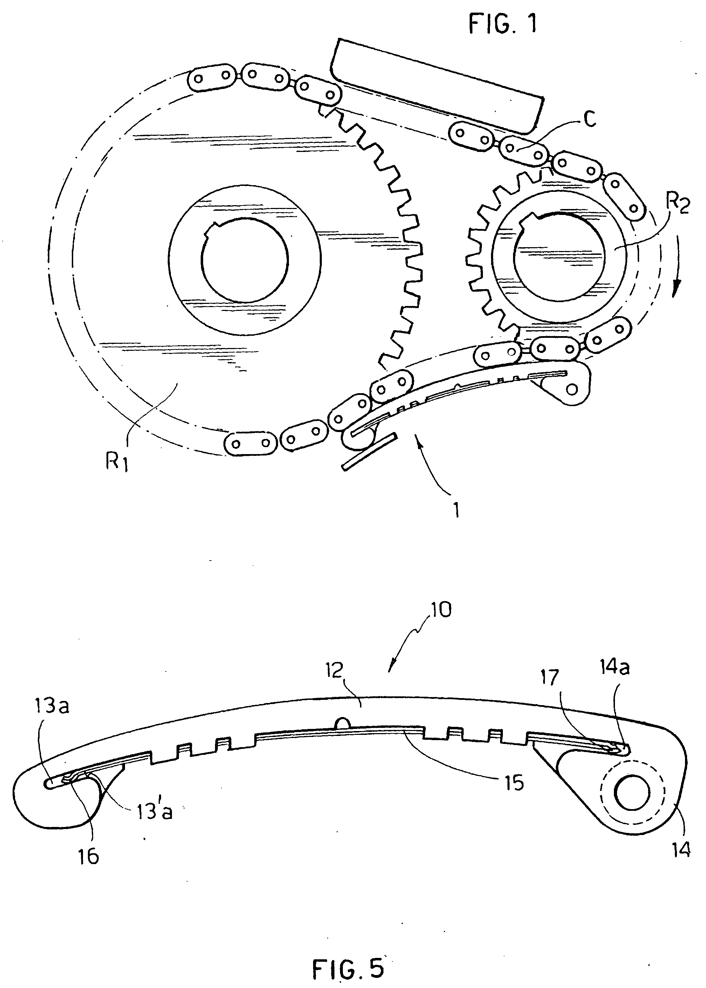

An exemplary embodiment of application of a shoe tensioner is shown in Figure 1, in which the tensioner is referenced 1, the chain is referenced C, and the sprockets are referenced R1 and R2. R2 is the driving sprocket and R1 is the driven sprocket. The upper side of the chain is the stretched side and the lower side is the slack or loose side.

Prior art blade springs 5, as best shown in Figure 4, have their ends in-line and coplanar with the rest of the body, or sometimes curved with their concavity turned to the same part as the tensioner's concavity. This has the disadvantage that, after a relatively long working time or after a certain number of cycles of contraction and stretching, an end of the blade spring, or set of blade springs, may form a groove in a wall of a pocket such as 4a, as indicated with dotted line 4d. This groove 4d is a trap for the end of the spring, which hinders its sliding movement along the pocket 4a and in practice blocks the tensioner, and prevents the tensioner to work.

An aim of this invention is to eliminate the above mentioned disadvantage of the springs locking in the pockets.

This aim has been achieved with a chain tensioner as mentioned in claim 1. Additional new and useful characteristics are mentioned in the following claims.

In other words, a new chain tensioner, of a type including a shoe element of plastic material having enlarged end heads with housing pockets and a blade spring or a set of blade springs with their ends housed in said housing pockets, the whole coupled so that the shoe exerts a force on the spring which tends to flatten it and the spring exerts on the shoe a force tending to curve it inward, is characterized by the fact that the ends of the spring or set of springs contained in the pockets of the shoe heads have a curled or rounded shape in the part thereof that is supported on the surface of the pocket.

The invention makes it possible to prolong the lifespan of the chain tensioner and improves the operation thereof.

An unrestrictive exemplary embodiment of the invention will be described below with reference to the attached drawings, in which:
Figure 1 is a schematic illustration of the operation of a chain tensioner of a type having a shoe and blade spring;
Figures 2, 3 and 4 show a chain tensioner of the shoe and blade spring type according to the prior art which is nearer to the invention;
Figure 5 shows a tensioner according to the invention;
Figure 6 shows a tensioner head according to the invention;
Figure 7 shows a modified embodiment.

As mentioned briefly with reference to the prior art, a known chain tensioner 1, of the shoe and blade spring type, includes a shoe element 2 made of plastic material, for example nylon, subject to deformation, and a blade spring 5, or a group or set of blade springs made of spring steel. The shoe and the spring or set of springs are coupled with the ends of the spring/s contained in pockets 3a, 4a provided at enlarged end heads 3, 4 of the shoe, and, since under non-deformed conditions the shoe is flat or planar, and the springs have a U-shape, in the assembled tensioner the springs apply a force on the shoe which tends to curve it inward, while the shoe applies a force on the springs which tends to flatten them out. The bend which the springs impart to the shoe increases with time and with the heat to which the tensioner is subjected. In fact, heat makes the shoe more flexible, allowing an automatic regulation of the chain's tension as a function of the transmitted torque, while, following the elongation of the chain over time, the tensioner becomes more curved, keeping the chain under tension.

As mentioned above, when the prior art tensioner is subjected to a number of cycles of contraction and laying out, it is verified that the ends 5a of the blade springs form a groove 4d in the wall of the pocket 4a (and analogously in the pocket 3a of head 3, not shown specifically), hindering a subsequent effective operation of the tensioner.

Figures 5, 6 and 7 show a chain tensioner according to the invention, which includes a body 12 made of plastic material which is liable to be deformed, a blade spring, or a set or pack of blade springs, 15. The body 12 has enlarged end heads 13 and 14, each of which forms a pocket 13a and 14a with the body of the shoe. According to the invention, the spring 15, or at least the outmost spring of the set of springs 15, is made with its ends 16, 17 rounded or curled or curved so as to have a convex surface in contact with the wall, respectively, 13'a, 14'a of the pocket 13a and 14a. Preferably, as in Figure 7, more than one spring of the set 15, preferably all the springs, are made with the end curled in a similar manner.

A preferred bend radius for the end of the springs is about 2 mm when the width of the pocket is 2 mm. Larger radii are preferred when the space is sufficient.

In this way, we can see that the end of the springs can slide more easily over the surface 14'a or 13'a, without forming a groove in it, and therefore without becoming wedged, which guarantees a longer working life for the tensioner.

## Claims

1. A chain tensioner (10) comprising:
a shoe made of plastic material subject to elastic deformation, said shoe being formed with a central body (12) and lateral heads which form pockets (13a, 14a) with facing openings;
at least one blade spring (15) with the ends (16, 17) thereof received in said pockets (13a, 14a) in the heads of the shoe,
the springs (15) exerting on the shoe a force which tends to curve it inward
characterized by the fact that at least one end (16, 17) of at least one spring (15), in contact with the lateral wall (13'a, 14'a) of at least one pocket (13a, 14a) is curved, curled or rounded to present a convex surface in contact with said wall (13'a, 14'a).

2. A chain tensioner according to claim 1, characterized by the fact that said spring has both ends (16, 17) having a convex curved shape in contact with the pockets (13a, 14a).

3. A chain tensioner according to claim 1, characterized by the fact that it includes a set of superimposed blade springs (15), of which more than one spring has convex curved ends.

## Patentansprüche

1. Ein Kettenspanner, der umfaßt:
- einen Gleitschuh aus elastisch verformbarem Kunststoff, wobei dieser Gleitschuh aus einem mittleren Körper und seitlichen Köpfen, die mit gegenüberliegenden Öffnungen versehenen Taschen bilden, besteht
- mindestens eine Blattfeder mit in den genannten Taschen in den Köpfen des Gleitschuhs untergebrachten Enden, wobei die Passung derart erfolgt, daß die Feder eine Kraft auf den Gleitschuh ausüben, die ihn zu verbiegen neigt,
dadurch gekennzeichnet, daß wenigstens ein Ende (16, 17) zumindest einer Feder (15), wenn es mit der seitlichen Wand wenigstens einer Tasche (13a, 14a) in Berührung ist, gebogen oder abgerundet ausgeführt ist, so daß es eine die genannte Wand berührende ballige Fläche aufweist.

2. Kettenspanner nach Anspruch 1 dadurch gekennzeichnet, daß die genannte Feder beide Enden (16,17) in Berührung mit beiden Taschen (13a, 14a) in gebogener, balliger Form aufweist.

3. Kettenspanner nach Anspruch 1 dadurch gekennzeichnet, daß er ein Paket aufeinanderliegender Blattfedern (15) umfaßt, wovon mehr als eine Feder gebogene, ballige Enden aufweist.

## Revendications

1. Tendeur pour chaînes du type comportant:
un patin en matière plastique soumis à des déformations élastiques, ledit patin étant formé d'un corps central et de têtes latérales qui forment des poches avec des ouvertures en face,
au moins un ressort à lamelle avec les extrémités qui sont logées dans lesdites poches dans les têtes du patin,
l'accouplement est réalisé de manière à ce que les ressorts exercent sur le patin une force qui tend à le courber,
caractérisé par le fait que l'une des extrémités au moins (16, 17) d'au moins un ressort (15) en contact avec la paroi latérale d'au moins une poche (13a, 14a) est réalisée courbe ou arrondie afin de présenter une surface convexe en contact avec ladite paroi.

2. Tendeur pour chaîne suivant la revendication 1, caractérisé par le fait que ledit ressort présente les deux extrémités (16, 17) sous forme courbe convexe en contact avec les deux poches (13a, 14a).

3. Tendeur suivant la revendication 1, caractérisé par le fait qu'il comporte un paquet de ressorts à lamelles (15) superposés dont un ou plusieurs ressorts comporte des extrémités courbes convexes.
